# DEMANDE DE BREVET EUROPEEN

(11) **EP 2 224 515 A1**
(43) Date de publication de la demande: **01.09.2010**
(21) Numéro de dépôt: 10151704.3
(22) Date de dépôt: 26.01.2010
(51) Int. Cl.: H01M 2/20, H01M 10/48

(54) **Dispositif de connexion électrique entre des générateurs électrochimiques**

(30) Priorité: 06.02.2009 FR 0900519
(71) Demandeur: Saft Groupe S.A., 93170 Bagnolet (FR)
(72) Inventeur: Narbonne, Alexandre, 33000 Bordeaux (FR); Turbe, Benoît, 33800 Bordeaux (FR); Berlureau, Thierry, 33300 Bordeaux (FR); Morin, Christophe, 86190 Béruges (FR)
(74) Mandataire: Hirsch & Associés

(57) **Abrégé**

L'invention se rapporte à un dispositif de connexion électrique (1) entre des bornes (8a, 8a', 8b, 8b') d'au moins deux générateurs électrochimiques (9a, 9b), comprenant une première couche consistant en une semelle métallique (4) adaptée à relier au moins deux bornes des générateurs électrochimiques et une seconde couche consistant en un circuit électronique imprimé (2) comprenant au moins un composant électronique (7). La couche de circuit électronique imprimé (2) est reliée électriquement et mécaniquement à la couche de semelle métallique (4).

Un tel dispositif de connexion électrique permet une connexion fiable avec les bornes des générateurs électrochimiques et une bonne dissipation thermique.

## Description

L'invention concerne la connexion électrique entre des générateurs électrochimiques dans une batterie. Plus particulièrement l'invention concerne la connexion de puissance entre au moins deux générateurs électrochimiques d'une batterie, et l'intégration d'un dispositif de contrôle des générateurs électrochimiques avec le dispositif de connexion de puissance.

Typiquement une batterie comporte une pluralité de générateurs électrochimiques appelés aussi accumulateurs, cellules ou éléments. Les générateurs électrochimiques sont reliés entre eux en série et/ou en parallèle par des dispositifs de connexion électrique formant une ligne de puissance. Un dispositif connu de connexion électrique entre générateurs électrochimiques est décrit dans le document JP-A-2007323951. Chaque générateur électrochimique se décharge en fournissant de l'énergie électrique à une application donnée. La batterie peut être chargée par un chargeur qui fournit de l'énergie électrique aux bornes de la batterie pour augmenter la quantité d'énergie électrique stockée dans chaque générateur électrochimique. Pour les applications de puissance, une connectique inter élément présentant une forte section est nécessaire. D'autre part, il est connu de prévoir un circuit électronique de contrôle et de gestion des générateurs électrochimiques pour contrôler leur état de charge et/ou leur état de santé, notamment au moyen de mesures de tension ou de courant individuelles ou de mesures au niveau d'un groupe de générateurs électrochimiques.

Les contraintes de connexion électrique et de contrôle électronique présentées ci-dessus peuvent être prises en charge par un ensemble mécanique appelé "busbar". Un busbar se compose typiquement de barrettes de forte section assurant la connexion de puissance et assemblées sur un circuit imprimé. Un tel busbar est par exemple utilisé dans les batteries commercialisées par le demandeur sous la référence 750046 et intégrant un busbar de référence 750762.

Sur un busbar classique, le circuit imprimé comporte des composants électroniques qui permettent un contrôle des paramètres des générateurs électrochimiques, tels que des composants de mesure du courant ou de la tension, des capteurs de température, ou autres. Les barrettes de connexion sont généralement assemblées par brasage ou rivetage sur le circuit imprimé d'une part, et par vissage, brasage ou soudage sur les bornes des générateurs électrochimiques d'autre part. Le courant pour les mesures de contrôle et/ou de gestion des générateurs électrochimiques est conduit par les brasures ou rivets et acheminé vers les composants électroniques du circuit au moyen de pistes gravées sur le circuit imprimé. Un busbar permet d'intégrer l'électronique de contrôle avec la connexion de puissance, et permet de positionner en une fois l'ensemble des barrettes de connexion sur la pluralité de générateurs électrochimiques.

Cependant, les barrettes de connexion doivent être précisément positionnées sur le circuit imprimé et nécessitent chacune des préparations avant assemblage, tels que des découpages, usinages, traitements de surface ou d'autres procédés qui représentent un lourd investissement. D'autre part, les procédés d'assemblage des barrettes de connexion au circuit imprimé sont difficiles à maîtriser. En particulier, certains procédés d'assemblage sont difficiles à mettre en oeuvre en présence de composants électroniques. Il s'en suit un taux de rebus important en production, ainsi que des défaillances possibles en utilisation. Ces défaillances sont d'autant plus probables que l'ensemble des bornes des générateurs électrochimiques de la batterie ne forme généralement pas un plan parfait. Ce défaut de planéité des bornes induit des contraintes dans les brasures, rivets ou soudures qui peuvent rompre. Il est également observé que l'échauffement des barrettes de connexion de puissance lors d'un passage de courant fort accélère le vieillissement des composants électroniques intégrés au circuit électronique du busbar et sollicite fortement les soudures des composants.

On connaît par ailleurs des systèmes dits SMI (Substrat Métallique Isolé). Un tel système comprend un circuit imprimé rigide ou flexible auquel est fixée une semelle métallique, généralement de l'aluminium. Le circuit imprimé et la semelle métallique sont assemblés au moyen d'une colle thermoconductrice. Le circuit imprimé peut comprendre des composants électroniques montés en surface. La semelle métallique assure la dissipation thermique pour le refroidissement des composants montés sur le circuit imprimé, mais elle n'est pas adaptée pour une conduction électrique. Le circuit imprimé n'est pas en contact électrique avec la semelle métallique.

Le document JP-A-2003133660 décrit un dispositif de connexion électrique flexible dans lequel des lignes d'alimentation de puissance électrique cohabitent avec des lignes de transport de signal. Les lignes électriques de signal et de puissance sont disposées côte à côte sur un même plan horizontal. Une couche protectrice est déposée de part et d'autre du plan formé par ces lignes électriques. Un tel dispositif ne permet pas de monter des composants en surface, et n'assure pas une bonne dissipation thermique des courants circulant sur les lignes de puissance.

Le document GB-A-1 394 878 décrit un dispositif dans lequel une couche de transport de puissance électrique et une couche de transport de signal sont disposées de part et d'autre d'une couche isolante. Le dispositif de ce document est prévu pour le câblage d'une installation d'habitation. Ce dispositif ne convient pas au contrôle et à la connexion de générateurs électrochimiques, ni au montage de composants électroniques. De plus, il n'est pas destiné à favoriser la dissipation thermique.

Le document WO-A-94 14 227 décrit un dispositif de connexion électrique comprenant des couches conductrices superposées, séparées par un isolant et communicant entre elles par endroits. Ce système est adapté pour une utilisation dans un convertisseur AC/DC haute puissance. Il n'est pas flexible, ne permet pas le montage de composants électroniques, et ne convient pas à la connexion et au contrôle de générateurs électrochimiques.

Aucun des dispositifs décrits ci-dessus n'est adapté à la connexion et au contrôle de générateurs électrochimiques. Il existe donc un besoin pour un dispositif de connexion électrique entre des générateurs électrochimiques qui associe des moyens de connexion de puissance électrique et des moyens de mesures électroniques, qui est fabriqué par des techniques peu coûteuses, qui assure des contacts électriques fiables, et qui permet de limiter le vieillissement des composants électroniques.

A cet effet, l'invention propose un busbar réalisé à partir d'une structure de type SMI (Substrat Métallique Isolé) dans lequel le circuit imprimé et la semelle métallique fixés mécaniquement l'un à l'autre, sont également reliés électriquement. Le circuit imprimé porte sur une de ses faces des pistes conductrices et des composants électroniques assurant les mesures de contrôle et la gestion des générateurs sous courant faible. La semelle métallique fixée sur la face opposée du circuit imprimé est utilisée pour le passage de courants forts entre les bornes des générateurs électrochimiques. Cette semelle permet en outre la dissipation de la chaleur produite par les composants, ainsi que la dissipation de la chaleur générée par le passage des courants forts dans ladite semelle. Une telle dissipation thermique est particulièrement efficace en raison de la grande surface d'échange entre la semelle et l'environnement. La semelle métallique peut-être découpée pour réaliser des zones de connexion qui sont isolées électriquement entre elles afin de relier une pluralité de générateurs électrochimiques.

Plus spécifiquement, l'invention propose un dispositif de connexion électrique entre des bornes d'au moins deux générateurs électrochimiques, comprenant :
- une première couche consistant en une semelle métallique adaptée à relier au moins deux bornes des générateurs électrochimiques, la couche de semelle métallique étant découpée pour définir au moins deux zones de connexion, chaque zone de connexion reliant électriquement deux bornes de générateurs électrochimiques et présentant une surface comprise entre 25 mm² et 800 cm² ;
- une seconde couche consistant en un circuit électronique imprimé comprenant au moins un composant électronique adapté à mesurer au moins un paramètre d'au moins un générateur électrochimique,
la couche de circuit électronique imprimé étant reliée électriquement et mécaniquement à la couche de semelle métallique.

Selon les modes de réalisation, le dispositif de connexion électrique selon l'invention peut comprendre une ou plusieurs des caractéristiques suivantes :
- la couche de circuit électronique imprimé et la couche de semelle métallique sont reliées électriquement par des rivets et/ou des trous traversants métallisés et/ou des trous d'encre conductrice et/ou des tiges métalliques et /ou des vis ;
- la couche de circuit électronique imprimé est reliée mécaniquement à la couche de semelle métallique par une couche adhésive isolante électriquement et/ou par co-lamination et/ou par dépôt de couches métalliques constituant la semelle métallique directement sur un côté de la couche de circuit imprimé ;
- la couche de circuit électronique imprimé présente une épaisseur comprise entre 0.05 mm et 3.2 mm ;
- la couche de circuit électronique imprimé est réalisée dans un matériau souple ou semi-rigide ;
- la couche de semelle métallique présente une épaisseur comprise entre 0,1 mm et 8 mm ;
- la couche de semelle métallique est composée d'un matériau présentant une conductibilité électrique supérieure à 10 m. Ω⁻¹. mm⁻² ;

L'invention concerne aussi une batterie comprenant une pluralité de générateurs électrochimiques et au moins un dispositif de connexion électrique selon l'invention.

L'invention concerne en outre un procédé de fabrication d'un dispositif de connexion électrique pour relier des bornes d'au moins deux générateurs électrochimiques, le procédé comprenant les étapes consistant à:
- assembler mécaniquement une couche de semelle métallique avec une couche de circuit imprimé ;
- découper la couche de semelle métallique pour former des zones de connexion, chaque zone de connexion présentant une surface comprise entre 25 mm² et 800 cm² ;
- assembler électriquement les zones de connexion de la couche de semelle métallique avec des pistes électriques de la couche de circuit imprimé.

Selon les modes de réalisation, le procédé de fabrication selon l'invention peut comprendre une ou plusieurs des caractéristiques suivantes :
- l'étape d'assemblage mécanique comprend une étape de préassemblage par collage puis de consolidation par compression ;
- l'étape d'assemblage mécanique comprend une étape de dépôt de couches métalliques sur la couche de circuit imprimé ;
- l'étape d'assemblage mécanique comprend une étape de co-laminage de la couche métallique et de la couche de circuit imprimé ;
- l'étape d'assemblage mécanique est précédée d'une étape de prédécoupe de la couche de semelle métallique ;
- l'étape de découpe de la couche de semelle métallique comprend en outre la découpe de découpes d'aisance dans la couche de circuit électronique imprimé.

D'autres caractéristiques et avantages de l'invention apparaîtront à la lecture de la description détaillée qui suit. Cette description est donnée à titre d'exemple uniquement, et en référence aux figures annexées qui montrent :
- figure 1, une vue schématique en coupe d'un dispositif de connexion selon l'invention;
- figure 2, un graphe illustrant les différences d'échauffement entre un busbar classique et un busbar selon l'invention.

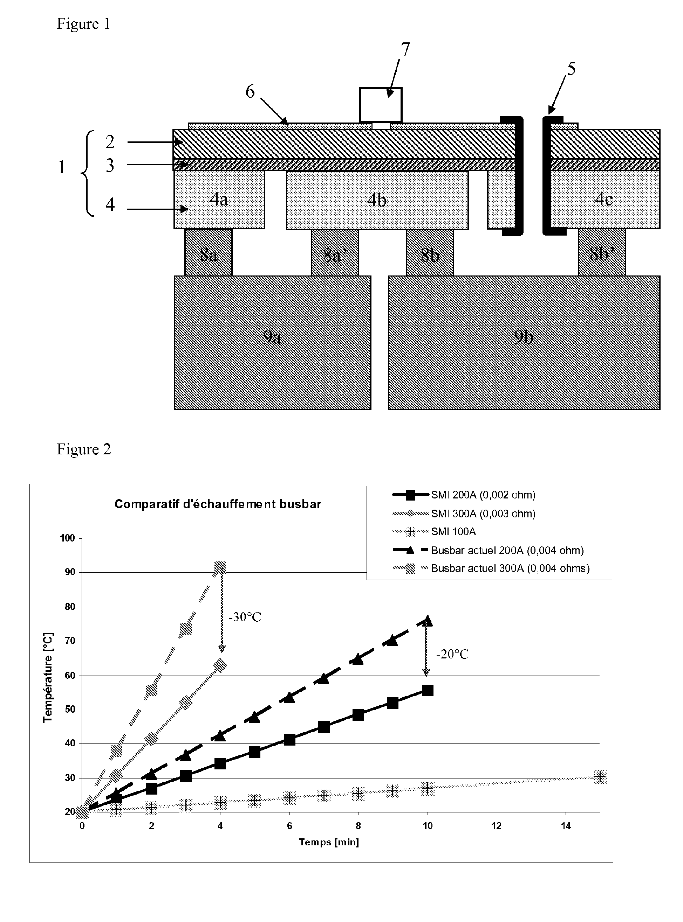

L'invention concerne un dispositif de type busbar composé d'une partie de mesure et d'une partie de puissance reliées l'une à l'autre électriquement et mécaniquement. La structure du dispositif selon l'invention va être décrite en se référant à la figure 1. Sur le schéma de la figure 1, les dimensions des différents éléments ne sont pas respectées. La figure 1 montre un dispositif de connexion électrique 1 comprenant une première couche 4 et une seconde couche 2. La première couche 4 recouvre sensiblement toute la surface d'un côté de la seconde couche 2.

La figure 1 montre aussi deux générateurs électrochimiques 9a et 9b avec leurs bornes de sortie de courant respectives 8a, 8a' et 8b, 8b'. Le dispositif de connexion 1 selon l'invention permet de relier au moins deux générateurs 9a, 9b en connectant électriquement leurs bornes de sortie de courant 8a, 8a', 8b, 8b'de manière appropriée. Sur la figure 1, les générateurs 9a, 9b sont représentés avec chacun deux bornes de sortie de courant 8a, 8a' et 8b, 8b', cependant une des deux bornes du générateur peut-être constituée par le conteneur lui-même. De tels agencements des bornes de sortie de courant des générateurs électrochimiques sont connus en soi. Sur la figure 1 est représenté un assemblage en série de deux générateurs 9a, 9b ; la borne 8a' d'un premier générateur 9a est reliée à la borne 8b de polarité opposée d'un deuxième générateur 9b. Les deux générateurs 9a, 9b peuvent être assemblés en parallèle. Dans ce cas les bornes 8a, 8b d'une même polarité des deux générateurs 9a, 9b sont reliées entre elles, et les bornes 8a', 8b' de polarité opposée sont également reliées entre elles. Il est entendu que la figure 1 est schématique et que le nombre de générateurs reliés en série et/ou en parallèle avec le dispositif de connexion 1 selon l'invention peut être beaucoup plus important.

La première couche 4 du dispositif 1 selon l'invention constitue une partie dite de puissance. Cette première couche consiste en une semelle métallique 4 reliant les bornes des générateurs électrochimiques selon l'agencement électrique souhaité (série ou parallèle). La seconde couche 2 du dispositif 1 selon l'invention constitue une partie dite de mesure et consiste en un circuit imprimé 2 comprenant au moins un composant électronique 7 adapté à mesurer au moins un paramètre d'au moins un générateur électrochimique. La couche de circuit électronique imprimé 2 est reliée mécaniquement à la couche de semelle métallique 4, par exemple par l'intermédiaire d'une couche adhésive 3 électriquement isolante. La couche de circuit électronique imprimé 2 est également reliée électriquement, par exemple par l'intermédiaire de rivets 5 à la couche de semelle métallique 4.

En particulier, la partie de mesure est constituée d'une couche de circuit électronique imprimé 2 composé d'un matériau souple tel que du PEN (polyéthylène naphtalate) ou du polyimide, ou d'un matériau semi-rigide retardateur de flamme tel que du FR4 (Flame Resistant 4). L'épaisseur de la couche de circuit électronique imprimé 2 peut-être comprise entre 0,05 mm et 3,2 mm selon le matériau choisi. Cette couche de circuit électronique imprimé 2 porte des pistes métalliques 6, en cuivre par exemple, qui permettent de délivrer les signaux électriques aux composants électroniques 7. Les composants électroniques 7 peuvent être des composants de mesure, des sondes de température, des faisceaux de signal, des bornes, des fusibles, des contacteurs, des microcontrôleurs, de l'électronique de traitement du signal, ou autres.

La partie de puissance est constituée d'une couche de semelle métallique 4 d'épaisseur comprise entre 0,1 et 8 mm. La semelle métallique 4 peut être composée par exemple de cuivre ou de ses alliages, d'aluminium ou de ses alliages, d'alliages cuivre/zinc Cu/Zn traités ou non par de l'argent ou du nickel pour permettre une conduction électrique efficace. La couche de semelle métallique 4 assure le transport de la puissance électrique vers et/ou à partir des générateurs électrochimiques 9a, 9b par l'intermédiaire des bornes 8a, 8a', 8b, 8b'. Afin d'améliorer la résistance à la corrosion le matériau de la semelle métallique 4 peut-être recouvert de nickel, d'étain ou de nickel puis d'argent. La semelle métallique 4 est de préférence composée d'un matériau présentant une conductibilité électrique supérieure à 10 m. Ω⁻¹. mm⁻².

Dans un mode de réalisation, si le nombre de générateurs 9a, 9b à connecter dans la batterie est supérieur à deux, la couche de semelle métallique 4 est alors découpée pour définir une pluralité de zones de connexion 4a, 4b, 4c, chaque zone reliant électriquement des bornes 8a', 8b de générateurs électrochimiques 9a, 9b selon l'agencement souhaité (en série sur la figure 1). Ces zones de connexion 4a, 4b, 4c peuvent présenter environ 5 mm de côté pour des applications de faible puissance, et jusqu'à 4 cm par 2 m pour des batteries de grande taille.

A section transversale équivalente, les zones de connexion 4a, 4b, 4c du dispositif de connexion électrique 1 selon l'invention ont une géométrie plus plate, i.e. plus fine et plus étendue, que les barrettes d'un busbar classique et autorisent donc une meilleure dissipation thermique. Typiquement, chaque zone de connexion 4a, 4b, 4c du dispositif de connexion électrique 1 peut présenter une surface comprise entre 25 mm² et 800 cm². Cette géométrie élargie des zones de connexion permet d'augmenter les surfaces d'échange thermique avec le circuit imprimé et avec le milieu ambiant par rapport à des barrettes de connexion dans un busbar classique.

La couche de circuit électronique imprimé 2 est reliée mécaniquement à la couche de semelle métallique 4. Cette liaison mécanique peut être assurée par une couche adhésive 3, par exemple une colle électriquement isolante ou par un ruban adhésif tel que l'adhésif de la société 3M® vendu sous la référence 9605. La couche de semelle métallique 4 peut également être mécaniquement liée à la couche de circuit électronique imprimé 2 directement, par exemple en déposant la semelle métallique 4 sur une face du circuit imprimé 2 par une technique de dépôt de couches minces ou en assemblant directement les couches de circuit imprimé 2 et de semelle métallique 4 par co-laminage. Dans ces cas, la présence d'une couche intermédiaire adhésive 3 n'est plus nécessaire. Lorsqu'une couche adhésive 3 est utilisée entre la couche de circuit imprimé 2 et la couche de semelle métallique 4, la couche adhésive 3 est électriquement isolante afin d'éviter tout court-circuit entre les zones de connexion 4a, 4b, 4c de la semelle métallique. La couche adhésive 3 est par exemple choisie avec une rigidité diélectrique supérieure ou égale à 16 kV/mm. La couche adhésive 3 peut être thermoconductrice ou non. En effet, cette couche adhésive 3 est relativement fine et ne fait pas barrière à une conduction de la chaleur entre la couche de circuit imprimé 2 et la couche de semelle métallique 4, même si elle n'est pas dopée pour être thermoconductrice.

Contrairement à un busbar classique, la liaison mécanique entre la couche de circuit imprimé 2 et les zones de connexion 4a, 4b, 4c avec les bornes 8a, 8a', 8b, 8b' des générateurs électrochimiques 9a, 9b s'étend sur l'ensemble de l'interface entre la couche de circuit imprimé 2 et la couche de semelle métallique 4. Une telle liaison mécanique est donc plus facile et plus rapide à réaliser que la fixation de chaque barrette au circuit imprimé.

Contrairement à une structure SMI classique, la couche de circuit électronique imprimé 2 est également reliée électriquement à la couche de semelle métallique 4. En particulier, des pistes 6 du circuit imprimé 2 peuvent être reliées par l'intermédiaire des zones de connexion 4a, 4b, 4c de la semelle métallique 4, avec les bornes 8a, 8a', 8b, 8b' des générateurs 9a, 9b. Ce contact électrique permet le transport de signaux entre les bornes 8a, 8a', 8b, 8b' des générateurs 9a, 9b et des composants électroniques 7 disposés sur le circuit imprimé 2. Le contact électrique entre la couche de circuit électronique imprimé 2 et la couche de semelle métallique 4 peut être assuré par des rivets 5 et/ou des trous traversants dont les bords sont métallisés ou remplis avec une encre conductrice, ou par toute autre moyen permettant d'assurer un contact électrique telles que des tiges métalliques ou des vis par exemple.

Lors du montage du dispositif de connexion électrique 1 sur les bornes 8a, 8a', 8b, 8b' des générateurs électrochimiques 9a, 9b, la couche de circuit électronique imprimé 2 garantit la cohérence mécanique de l'ensemble en maintenant en position les zones de connexion 4a, 4b, 4c avant leur montage sur les bornes 8a, 8a', 8b, 8b' des générateurs électrochimiques 9a, 9b. Des découpes d'aisance peuvent être aménagées sous forme de découpes dans la couche métallique 4 et éventuellement dans la couche de circuit imprimé 2 afin d'augmenter davantage la souplesse du dispositif de connexion 1, et permettre ainsi de compenser les irrégularités de hauteur des bornes 8a, 8a', 8b, 8b' des générateurs électrochimiques 9a, 9b.

Les zones de connexion 4a, 4b, 4c de la semelle métallique 4 peuvent être reliées aux bornes 8a, 8a', 8b, 8b' des générateurs électrochimiques 9a, 9b par vissage, rivetage, soudage électrique, soudage laser, soudage par ultrason, ou soudage par friction, ou toute autre technique appropriée. La mise en oeuvre de la connexion entre la semelle métallique 4 et les bornes 8a, 8a', 8b, 8b' des générateurs électrochimiques 9a, 9b peut nécessiter de supprimer localement les couches de circuit imprimé 2 et d'adhésif 3 afin de permettre le passage de vis ou des outils propres à la méthode de soudage choisie.

L'invention concerne également un procédé de fabrication du dispositif de connexion électrique 1 entre générateurs électrochimiques 9 présenté précédemment.

L'assemblage mécanique entre la couche de semelle métallique 4 et la couche de circuit électronique imprimé 2 peut-être obtenu par des procédés de stratification ou de laminage. Le procédé de stratification est de préférence utilisé pour des couches de circuit électronique imprimé 2 semi-rigides tels que composés de FR4 par exemple. Un préassemblage de la couche de semelle métallique 4 avec la couche de FR4 est d'abord réalisé avec une couche de colle 3 à l'interface des deux couches. Ce préassemblage est ensuite introduit dans une presse pendant une durée adaptée pour permettre une adhérence stable entre la couche de FR4 et la couche de semelle métallique 4. Un procédé de laminage ou de contre collage est préféré pour des couches de circuit électronique imprimé 2 de film souple (PEN, Polyimide). Un préassemblage de la couche de semelle métallique 4 avec le film souple est d'abord réalisé avec une colle 3 à l'interface des deux couches. Ce préassemblage est ensuite passé dans un ensemble de rouleaux de compression permettant un contact mécanique stable entre les deux couches. Les couches de circuit imprimé 2 et de semelle métallique 4 peuvent aussi être directement co-laminées sans préassemblage avec une couche adhésive. Que l'on réalise l'assemblage mécanique de la couche de semelle métallique 4 avec la couche de circuit électronique imprimé 2 par stratification ou par laminage, la durée moyenne pour cette étape est nettement inférieure à celle nécessaire pour l'assemblage de barrettes sur un busbar classique. Par exemple cette étape d'assemblage est de quelques minutes dans le cas d'un laminage, contre environ 1 heure pour fixer 8 barrettes sur un busbar classique. La couche de semelle métallique 4 peut aussi être réalisée directement par dépôt de couches minces métalliques sur une face de la couche de circuit imprimé 2 (face opposée à celle portant les composants électroniques 7). Dans ce cas, l'assemblage mécanique est assuré par la technique de fabrication de la couche de semelle métallique 4 sur la couche de circuit électronique imprimé 2.

Une fois assemblée à la couche de circuit électronique imprimé 2 souple ou semi-rigide, la couche de semelle métallique 4 peut-être découpée pour obtenir une pluralité de zones de connexion 4a, 4b, 4c lorsque le nombre de générateurs électrochimiques 9a, 9b à connecter est supérieur à deux. Ainsi, contrairement aux busbars classiques, il n'y a pas d'assemblage de barrettes individuelles sur un circuit imprimé. Le procédé de fabrication selon l'invention est plus précis, plus rapide, et moins coûteux. La découpe de la couche de semelle métallique 4 peut être réalisée par usinage, fraisage, estampage, par gravure chimique, par découpe au jet d'eau ou par découpe au laser. Les découpes d'aisance dans la couche de circuit imprimé 2 peuvent être réalisées pendant cette étape.

Dans un mode de réalisation, la couche de semelle métallique 4 peut-être partiellement découpée avant le préassemblage, notamment lorsque la semelle 4 est épaisse et/ou lorsque le nombre de zones de connexion à réaliser est important. En effet, il peut être préféré de réaliser une partie de la découpe avant préassemblage pour limiter les contraintes sur la couche de circuit électronique imprimé 2. La prédécoupe peut ensuite être complétée par une découpe après assemblage qui permet d'achever le processus de découpe de la couche de semelle métallique 4 et de réaliser les découpes d'aisance dans la couche de circuit imprimé 2.

Le dispositif de connexion électrique selon l'invention peut donc être fabriqué plus rapidement qu'un busbar classique et permet une connexion fiable avec les bornes 8a, 8a', 8b, 8b' des générateurs électrochimiques 9a, 9b.

D'autres avantages de l'invention par rapport à un busbar classique seront plus évidents en se référant à la figure 2.

Dans les busbar classiques, les barrettes de connexion ont généralement une épaisseur de 3 à 4 mm et une largeur de 12 à 16 mm, soit une section transversale d'environ 50 mm². Les mesures présentées en figure 2 ont été réalisées sur un busbar classique et sur un dispositif de connexion électrique 1 selon l'invention. Le dispositif de connexion utilisé pour les mesures de la figure 2 présente une couche de semelle métallique 4 d'une épaisseur d'environ 1,5 mm et une largeur d'environ 35 mm, soit une section transversale d'environ 50 mm². Comme indiqué plus haut, à section transversale équivalente, les zones de connexion 4a, 4b, 4c du dispositif de connexion électrique 1 selon l'invention ont une géométrie plus plate et plus étendue que les barrettes d'un busbar classique et autorisent donc une meilleure dissipation thermique. Cette géométrie élargie permet des surfaces d'échange thermique avec le circuit imprimé et le milieu ambiant améliorées par rapport à des barrettes de connexion dans un busbar classique. On observe d'ailleurs sur la figure 2 que l'échauffement du dispositif de connexion 1 est plus faible par rapport à un busbar classique.

Le graphe de la figure 2 montre l'échauffement pour un busbar classique et pour un dispositif de connexion selon l'invention pour différents courants. Notamment, le graphe de la figure 2 montre la température en fonction du temps, la température étant mesurée d'une part sur une barrette de busbar classique ayant une section transversale de 50 mm² et une résistivité de 0.004 ohm et d'autre part sur la semelle d'un dispositif de connexion selon l'invention ayant une section transversale de 50 mm² et une résistivité comprise entre 0.002 ohm et 0.003 ohm. Les températures sont mesurées pour différents courants circulant dans les connexions.

Pour un courant de 100A (courbe gris clair), on remarque que l'échauffement dans le dispositif de connexion selon l'invention reste limité ; inférieur à 30°C après plus de 10 minutes. Pour un courant de 300 A (courbes gris foncé), l'échauffement du dispositif de connexion selon l'invention (courbe trait plein) est compris entre 60°C et 70°C au bout de 4 minutes, soit environ 30°C de moins par rapport à l'échauffement dans un busbar classique (courbe pointillés) pour le même courant. Pour un courant de 200 A (courbes noires), l'échauffement du dispositif de connexion selon l'invention (courbe trait plein) est compris entre 50°C et 60°C au bout de 10 minutes, soit environ 20°C de moins par rapport à l'échauffement dans le busbar classique (courbe pointillés) pour le même courant.

La dissipation thermique dans le dispositif de connexion selon l'invention est donc nettement plus importante que dans un busbar classique du fait d'une surface plus importante, comprise entre 25 mm² et 800 cm² permettant un échange thermique efficace avec l'environnement.

D'autre part les zones de connexion 4a, 4b, 4c du dispositif de connexion électrique 1 selon l'invention sont plus déformables par comparaison avec des barrettes de connexion d'un busbar classique car elles sont plus fines. Cette possibilité de déformation permet d'améliorer le contact entre les zones de connexion 4a, 4b, 4c et les bornes 8a, 8a', 8b, 8b' des générateurs électrochimiques 9a, 9b en absorbant les défauts de planéité. Ce contact électrique amélioré entre le dispositif de connexion 1 et les bornes 8a, 8a', 8b, 8b' de sortie de courant des générateurs 9a, 9b permet une réduction de la résistance électrique de contact jusqu'à deux fois plus faible par rapport à un busbar classique. L'échauffement dû aux courants forts est donc réduit.

Le dispositif de connexion électrique 1 entre générateurs électrochimiques 9a, 9b selon l'invention permet donc d'associer des moyens de connexion de puissance électrique et des moyens de mesures électroniques au sein d'un dispositif Ce dispositif est facile à fabriquer, soulage les contraintes liées aux irrégularités de hauteur des bornes 8a, 8a', 8b, 8b' des générateurs électrochimiques 9a, 9b, présente une bonne dissipation thermique améliorant ainsi la durabilité des composants électroniques et possède une résistance électrique de contact réduite avec les bornes 8a, 8a', 8b, 8b' des générateurs électrochimiques 9a, 9b.

L'invention concerne également une batterie comprenant une pluralité de générateurs électrochimiques 9a, 9b et au moins un dispositif de connexion électrique 1 selon l'invention. Les générateurs électrochimiques 9a, 9b peuvent être de tout type, tel que Li-Ion, Ni-MH, Ni-Cd ou autre. Le dispositif de connexion électrique 1 selon l'invention peut-être utilisé sur une batterie comprenant au moins deux générateurs électrochimiques 9a, 9b. La découpe de la semelle métallique 4 est déterminée en fonction du nombre de générateurs à connecter. Le dispositif de connexion selon l'invention peut ainsi s'adapter sur une batterie qui comprend par exemple plusieurs dizaines de générateurs électrochimiques.

## Revendications

1. Dispositif de connexion électrique (1) entre des bornes (8a, 8a', 8b, 8b') d'au moins deux générateurs électrochimiques (9a, 9b), comprenant :
- une première couche consistant en une semelle métallique (4) adaptée à relier au moins deux bornes des générateurs électrochimiques, la couche de semelle métallique (4) étant découpée pour définir au moins deux zones de connexion (4a, 4b, 4c), chaque zone de connexion (4a, 4b, 4c) reliant électriquement deux bornes (8a, 8a', 8b, 8b') de générateurs électrochimiques (9a, 9b) et présentant une surface comprise entre 25 mm² et 800 cm²;
- une seconde couche consistant en un circuit électronique imprimé (2) comprenant au moins un composant électronique (7) adapté à mesurer au moins un paramètre d'au moins un générateur électrochimique,
la couche de circuit électronique imprimé (2) étant reliée électriquement et mécaniquement à la couche de semelle métallique (4).

2. Dispositif selon la revendication 1, dans lequel la couche de circuit électronique imprimé (2) et la couche de semelle métallique (4) sont reliées électriquement par des rivets (5) et/ou des trous traversants métallisés et/ou des trous d'encre conductrice et/ou des tiges métalliques et /ou des vis.

3. Dispositif selon la revendication 1 ou 2, dans lequel la couche de circuit électronique imprimé (2) est reliée mécaniquement à la couche de semelle métallique (4) par une couche adhésive (3) isolante électriquement, et/ou par co-lamination, et/ou par dépôt de couches métalliques constituant la semelle métallique (4) directement sur un côté de la couche de circuit électronique imprimé (2).

4. Dispositif selon l'une des revendications précédentes, dans lequel la couche de circuit électronique imprimé (2) présente une épaisseur comprise entre 0.05 mm et 3.2 mm.

5. Dispositif selon l'une des revendications 1 à 4, dans lequel la couche de circuit électronique imprimé (2) est réalisée dans un matériau souple.

6. Dispositif selon l'une des revendications 1 à 4, dans lequel la couche de circuit électronique imprimé (2) est réalisée dans un matériau semi-rigide.

7. Dispositif selon l'une des revendications précédentes, dans lequel la couche de semelle métallique (4) présente une épaisseur comprise entre 0,1 mm et 8 mm.

8. Dispositif selon l'une des revendications précédentes, dans lequel la couche de semelle métallique (4) est composée d'un matériau présentant une conductibilité électrique supérieure à 10 m. Ω⁻¹. mm⁻².

9. Dispositif selon l'une des revendications précédentes, atteignant une température comprise entre 60°C et 70°C après 4 minutes pour un courant circulant dans la semelle métallique (4) de 300 A

10. Dispositif selon l'une des revendications précédentes, atteignant une température comprise entre 50°C et 60°C après 10 minutes pour un courant circulant dans la semelle métallique (4) de 200 A.

11. Batterie comprenant une pluralité de générateurs électrochimiques (9) et au moins un dispositif de connexion électrique (1) selon l'une des revendications 1 à 10.

12. Procédé de fabrication d'un dispositif de connexion électrique (1) pour relier des bornes (8a, 8a', 8b, 8b') d'au moins deux générateurs électrochimiques (9a, 9b), le procédé comprenant les étapes consistant à:
- assembler mécaniquement une couche de semelle métallique (4) avec une couche de circuit imprimé (2) ;
- découper la couche de semelle métallique (4) pour former des zones de connexion (4a, 4b, 4c), chaque zone de connexion (4a, 4b, 4c) présentant une surface comprise entre 25 mm² et 800 cm²;
- assembler électriquement les zones de connexion (4a, 4b, 4c) de la couche de semelle métallique (4) avec des pistes électriques (6) de la couche de circuit imprimé (2).

13. Procédé de fabrication d'un dispositif de connexion électrique selon la revendication 12, dans lequel l'étape d'assemblage mécanique comprend une étape de préassemblage par collage puis de consolidation par compression.

14. Procédé de fabrication d'un dispositif de connexion électrique selon la revendication 12, dans lequel l'étape d'assemblage mécanique comprend une étape de dépôt de couches métalliques sur la couche de circuit imprimé (2).

15. Procédé de fabrication d'un dispositif de connexion électrique selon la revendication 12, dans lequel l'étape d'assemblage mécanique comprend une étape de co-laminage de la couche métallique (4) et de la couche de circuit imprimé (2).

16. Procédé de fabrication d'un dispositif de connexion électrique selon l'une des revendications 12 à 15, dans lequel l'étape d'assemblage mécanique est précédée d'une étape de prédécoupe de la couche de semelle métallique (4).

17. Procédé de fabrication d'un dispositif de connexion électrique (1) selon l'une des revendications 12 à 16, dans lequel l'étape de découpe de la couche de semelle métallique (4) comprend en outre la découpe de découpes d'aisance dans la couche de circuit électronique imprimé (2).
